# EUROPÄISCHE PATENTANMELDUNG

(11) **EP 3 806 009 A1**
(43) Veröffentlichungstag der Anmeldung: **14.04.2021**
(21) Anmeldenummer: 20199511.5
(22) Anmeldetag: 01.10.2020
(51) Int. Cl.: G06Q 10/04

(54) **VERFAHREN ZUM BEWERTEN EINER AUSGEWÄHLTEN ROUTE, ROUTENBEWERTUNGSSYSTEM UND COMPUTERPROGRAMM**

(30) Priorität: 11.10.2019 DE 102019215656
(71) Anmelder: ZF Friedrichshafen AG, 88046 Friedrichshafen (DE)
(72) Erfinder: Chaulwar, Amit, 88046 Friedrichshafen (DE); Fischer, Torben, 88131 Lindau (DE); Stiller, Johannes, 88214 Ravensburg (DE); Reichold, Johannes, 78467 Konstanz (DE); Weidenbach, Anatol, 88149 Nonnenhorn (DE); Zhang, Qiaoling, 88682 Salem (DE); Singh, Jagmal, 88045 Friedrichshafen (DE)

(57) **Zusammenfassung**

Die Erfindung bezieht sich auf autonome Fahrzeuge und das autonome Fahren, insbesondere auf ein Verfahren und ein Routenbewertungssystem zum Identifizieren von für den autonomen Betrieb in Frage kommende Routen. Ferner betrifft die Erfindung noch ein Computerprogramm.

## Beschreibung

Die Erfindung bezieht sich auf autonome Fahrzeuge und das autonome Fahren, insbesondere auf ein Verfahren und ein Routenbewertungssystem zum Identifizieren von für den autonomen Betrieb in Frage kommende Routen. Ferner betrifft die Erfindung noch ein Computerprogramm.

Ein automatisiertes/autonomes Fahrzeug ab einem Autonomielevel vier (L4-Fahrzeug), ist in der Lage, alle Fahrfunktionen in bestimmten Verkehrssituationen autonom auszuführen. Obwohl dieses System in einer strukturierten Umgebung funktioniert, gibt es viele Merkmale, wie Fußgängerüberwege, Verkehrszeichen, Bushaltestellen usw., die das Arbeiten eines automatisierten L4-Fahrzeugs beeinflussen. Darüber hinaus können diese Merkmale an verschiedenen Stellen unterschiedliche Formen haben, für die die Fahrfunktionen des automatisierten L4-Fahrzeugs angepasst werden muss. Dies erzeugt eine überwältigende Anzahl von Fahrsituationen und macht es unmöglich, allgemeine Fahrfunktionen direkt zu entwickeln, die in allen Fahrsituationen funktionieren.

Die DE 10 2016 116 272 A1 offenbart ein computerimplementiertes Verfahren, das Folgendes umfasst: Erhalten von Daten von ersten mehreren Straßensegmenten, die bereits für einen oder mehrere autonome Betriebe auf einer autonomen Stufe zugelassen sind; Generieren einer Straßensegmentvorlage auf der Basis dieser Daten; und Neukonstruieren von zweiten mehreren Straßensegmenten, die nicht für den einen oder die mehreren autonomen Betriebe auf der autonomen Stufe zugelassen wurden, auf der Basis der Straßensegmentvorlage, um mehrere neu konstruierte Straßensegmente bereitzustellen.

Es ist daher eine Aufgabe der Erfindung ein Verfahren und ein Routenbewertungssystem anzugeben, welches eine gewünschte Route für den Betrieb eines autonomen Fahrzeugs, insbesondere ab einer Autonomiestufe vier, bewertet.

Diese Aufgabe wird gelöst durch ein Verfahren zum Bewerten einer ausgewählten Route zur Verwendung der Route in einem autonom betriebenen Fahrzeug mit den Merkmalen des Anspruchs 1 sowie ein Routenbewertungssystem mit den Merkmalen des Anspruchs 11.

Ferner wird die Aufgabe gelöst durch ein Computerprogramm mit den Merkmalen des Anspruchs 14.

In den Unteransprüchen sind weitere vorteilhafte Maßnahmen aufgelistet, die geeignet miteinander kombiniert werden können, um weitere Vorteile zu erzielen.

Die Aufgabe wird gelöst durch ein Verfahren zum Bewerten einer ausgewählten Route zur Verwendung der Route in einem autonom betriebenen Fahrzeug, umfassend der Schritte:
- Bereitstellen eines Funktionskatalogs in einer Speichereinheit, wobei der Funktionskatalog merkmalsbasierte Routenabschnitte umfasst, wobei jedem merkmalsbasierten Routenabschnitt verschiedene Verkehrssituationen mit jeweiligen Fahrfunktionen zugeordnet sind,
- Durchführen einer automatisierten Situationsbewertung durch abschnittsweises Unterteilen der ausgewählten Route in einzelne aufeinanderfolgende erste merkmalsbasierte Routenabschnitte anhand von ersten Infrastrukturmerkmalen, wobei die ersten Infrastrukturmerkmale aus einer digitalen Karte durch eine Recheneinheit extrahiert werden, und identifizieren anhand des Funktionskatalogs nicht in dem Funktionskatalog umfasste erste merkmalsbasierte Routenabschnitte durch die Recheneinheit, und anschließende Bewertung dieser nicht umfassten ersten merkmalsbasierten Routenabschnitte,
- Durchführen einer computergestützten subjektiven Bewertung durch Identifizieren in der Situationsbewertung nicht erkannter zweiter Infrastrukturmerkmale, wobei die zweiten Infrastrukturmerkmale aus bereitgestellten, die ausgewählte Route zeigende, Video- und/oder Bilddaten identifiziert werden, und unterteilen oder einteilen der ersten Routenabschnitte, welche diese zweiten identifizierten Infrastrukturmerkmale aufweisen, in zweite merkmalsbasierte Routenabschnitte, und identifizieren anhand des Funktionskatalogs die nicht in dem Funktionskatalog umfassten zweiten merkmalsbasierten Routenabschnitte durch die Recheneinheit, und anschließende Bewertung dieser nicht umfassten zweiten merkmalsbasierten Routenabschnitte,

- Vervollständigen und/oder berichtigen bei Unvollständigkeit und/oder Fehlerhaftigkeit der durch die Situationsbewertung identifizierten ersten Infrastrukturmerkmale in den jeweiligen ersten Routenabschnitten anhand der, die ausgewählte Route zeigende, Video- und/oder Bilddaten, und durchführen einer erneuten Situationsbewertung anhand der vervollständigten und/oder berichtigten ersten Routenabschnitte,
- Durchführen einer simulativen Bewertung durch Erzeugen von Verkehrsszenarien in Bezug auf alle merkmalsbasierten Routenabschnitte und anschließende Bewertung aller Verkehrsszenarien unter Verwendung der Fahrfunktionen und Verkehrssituationen, welche dem Funktionskatalog entnommen werden,
- Computergestützte Bewertung der ausgewählten Route zumindest anhand der Bewertung aus der simulativen Bewertung, der subjektiven Bewertung und der Situationsbewertung.

Merkmalsbasierte Routenabschnitte sind beispielsweise zu einer früheren Route erstellte Routenabschnitte, welche neben dem relevanten Straßenabschnitt noch Zusatzinformationen in Form von erkannten Infrastrukturmerkmalen zu dem Routenabschnitt enthalten, wie beispielsweise Vorfahrtsinformationen zu einer abknickenden Straße. Ein merkmalsbasierter Routenabschnitt ist beispielsweise ein Verkehrsknoten, wobei dem Verkehrsknoten spezifische knotenbedingte Infrastrukturmerkmale hinzugefügt wurden. Ist der Verkehrsknoten beispielsweise eine Straßenkreuzung, so können beispielsweise Vorfahrtsregeln, Spurmarkierungen, Anzahl der Fahrspuren etc. hinterlegt sein.

Weitere solcher Infrastrukturmerkmale sind beispielsweise Fußgängerüberwege, Verkehrszeichen, Bushaltestellen usw.

Solche Infrastrukturmerkmale beeinflussen das Fahren eines autonomen Fahrzeugs entlang einer Route.

Verkehrssituationen sind Situationen in Bezug auf diese merkmalsbasierten Routenabschnitte, beispielsweise den Verkehrsknoten, also beispielsweise der Straßenkreuzung.
Eine Verkehrssituation beschreibt die Gesamtheit der Umstände ohne Berücksichtigung anderer Verkehrsteilnehmer.

Verkehrsszenarien ergänzen die Informationen einer Verkehrssituation um zusätzliche Informationen über alle Verkehrsteilnehmer.

Fahrfunktionen sind anschließend die Anweisungen zum Betrieb, beispielsweise eine Längsführung/Querführung des Fahrzeuges, in dieser Verkehrssituation.

Erfindungsgemäß werden merkmalsbasierte Routenabschnitte für einzelne Routen entwickelt, die eine Reihe aufeinanderfolgender elementarer Verkehrssituationen darstellen. Erfindungsgemäß ist ein Funktionskatalog vorgesehen, in dem für die auf merkmalsbasierten Routenabschnitten auftretenden Verkehrssituationen eine jeweilige Fahrfunktion hinterlegt ist.

Erfindungsgemäß wird die Situationsbewertung durchgeführt, indem anhand des Funktionskatalogs nicht in dem Funktionskatalog umfasste erste merkmalsbasierte Routenabschnitte durch eine Recheneinheit identifiziert werden. So gibt es beispielsweise entlang der ausgewählten Route einen Kreisverkehr, welcher im Funktionskatalog nicht vorhanden ist, bzw. zu welchen im Funktionskatalog keine Verkehrssituation mit einer Fahrfunktion hinterlegt ist. Die im Funktionskatalog nicht umfassten ersten merkmalsbasierten Routenabschnitte können als "Lücken (gaps)" definiert werden, wenn für diese im Funktionskatalog keine Verkehrssituation mit Fahrfunktionen hinterlegt ist.

Erfindungsgemäß wird die computergestützte subjektive Bewertung anhand von bereitgestellten Video- und/oder Bilddaten der ausgewählten Route vorgenommen. Dazu werden zweite Infrastrukturmerkmale, welche in der Situationsbewertung nicht erkannt worden sind, in den Video- und/oder Bilddaten identifiziert. Zweite Infrastrukturmerkmale sind beispielsweise Geschwindigkeitsbegrenzungsmittel, Verkehrsinseln, die nicht in der digitalen Karte aufgeführt sind oder nur sehr schwer zu extrahieren sind und daher in der Situationsbewertung nicht erfasst wurden.

Erfindungsgemäß wird die Bewertung der simulierten Verkehrsszenarien durchgeführt, in dem der Funktionskatalog, also die im Funktionskatalog vorhandenen verschiedenen verkehrssituationsabhängigen Fahrfunktionen, auf die Verkehrsszenarien angewendet werden. Dadurch können "Lücken" beispielsweise als Probleme in dem bereits vorhandenen Funktionskatalog identifiziert werden.

In der simulativen Bewertung werden Verkehrsszenarien entlang der Route erzeugt. Dazu können beispielsweise Parameter wie Position, Geschwindigkeit, Beschleunigung, Größe usw. der Verkehrsteilnehmer stochastisch geändert werden. Anschließend wird eine Bewertung der Verkehrsszenarien durchgeführt, in dem der Funktionskatalog, also die im Funktionskatalog vorhandenen verschiedenen verkehrssituationsabhängigen Fahrfunktionen, auf die Verkehrsszenarien angewendet werden. Dadurch können "Lücken" beispielsweise als Probleme in dem bereits vorhandenen Funktionskatalog identifiziert werden.

Mittels des erfindungsgemäßen Verfahrens wird so eine genaue und gründliche Lückenanalyse anhand der Situationsbewertung, der computergestützten subjektiven Bewertung und der simulativen Bewertung für eine ausgewählte Route angegeben. Erweist sich die ausgewählte Route als nicht mit einem autonomen Fahrzeug befahrbar, oder nur unter hohen Kosten und Entwicklungsaufwand, so kann dieses rechtzeitig erkannt werden.

Wird die ausgewählte Route unter Behebung der auftretenden Mängel und Schwierigkeiten als befahrbar eingestuft, so kann der Funktionskatalog bevorzugt aktualisiert werden.

Ferner umfasst das Verfahren vorzugsweise die weiteren Schritte:
- Bereitstellen von Sensordaten, welche von einem Erfassungssystem des Fahrzeugs entlang der ausgewählten Route bereitgestellt werden,
- Bewertung der ausgewählten Route, durch eine computergestützte Bewertung des Erfassungssystems anhand der bereitgestellten Sensordaten und eine Bewertung des Funktionskatalogs anhand des Anwendens des Funktionskatalogs auf die, durch die bereitgestellten Sensordaten erfassten Verkehrsszenarien.
Vorzugsweise erfolgt die Bewertung des Erfassungssystems und die Bewertung des Funktionskatalogs im Nachgang, das heißt nicht zeitgleich beispielsweise im Fahrzeug, durch die Recheneinheit.

Weiterhin vorzugsweise werden die Sensordaten kontinuierlich erzeugt.

Die Sensordaten werden vorzugsweise während der gesamten Betriebsdauer des automatisierten L4-Fahrzeugs kontinuierlich gesammelt, das heißt, dass vorzugsweise bei jedem Einsatz des Fahrzeuges auf der Route die Sensordaten protokolliert werden und beispielsweise in einer Cloud gespeichert werden. In diesem Schritt können weitere Fehler in den Funktionskatalog festgestellt werden, da eine große Datenmenge zur Verfügung steht. Durch die Entstehung von großen Datenmengen können damit so weitere Mängel, beispielsweise bei dem Erfassungssystem des Fahrzeugs und/oder bei Anwenden des Funktionskatalogs auf die, durch die bereitgestellten Sensordaten erfassten Verkehrsszenarien, erkannt werden.

Vorzugsweise werden die Video- und/oder Bilddaten der ausgewählten Route durch ein Erfassungssystem des Fahrzeugs bereitgestellt. Bevorzugt werden mehrere Video- und/oder Bilddaten der ausgewählten Route zu unterschiedlichen Wetterdaten durch das Erfassungssystem des Fahrzeugs bereitgestellt. Dadurch kann eine große und umfangreiche Datenmenge zur Verfügung gestellt werden.

Ferner werden weiterhin bevorzugt zumindest teilweise die dem autonomen Fahrzeug zugrundeliegenden Fahrfunktionen und/oder Fahrzeugfunktionen anhand der Video-/Bilddaten computergestützt überprüft. Dadurch kann ein sicherer autonomer Betrieb erzielt werden.

Vorzugsweise werden die Verkehrsszenarien virtuell, und damit kostengünstig, in der Recheneinheit erzeugt.

Dazu sammelt ein Fahrzeug mit allen Sensoren echte Sensordaten entlang der Route, vorzugsweise bei verschiedenen Wetter- und Verkehrsbedingungen. Insbesondere werden Sensordaten für interessante Verkehrsszenarien mit unterschiedlichen Verkehrsteilnehmern erfasst. Bei Bedarf werden diese Verkehrsszenarien unter Verwendung der tatsächlichen Verkehrsteilnehmer auf der Route repliziert und Daten gesammelt. Die gesammelten Daten werden vorzugsweise im Nachgang, insbesondere offline analysiert, um Mängel zu erkennen.

Ferner können die Video- und/oder Bilddaten der ausgewählten Route durch das Erfassungssystem eines oder mehrerer Verkehrsteilnehmer in einer Cloud bereitgestellt werden. So kann schnell eine umfangreiche Datenmenge zur Verfügung stehen.

Vorzugsweise werden verschiedenen Route durch einen Startpunkt und einen Zielpunkt und dazwischenliegenden Wegpunkte vorgegeben, wobei die automatisierte Situationsbewertung verwendet wird, um die verschiedene Routen basierend auf diesem vorgegebenen Startpunkt und Zielpunkt und den dazwischenliegenden Wegpunkte für die weitere Auswertung zu priorisieren. Dadurch können nicht oder nur unter großem Aufwand autonom befahrbare Routen schnell ausgeschlossen werden.

Ferner wird die Aufgabe gelöst durch ein Routenbewertungssystem zum Bewerten einer ausgewählten Route zur Verwendung der Route in einem autonom betriebenen Fahrzeug, aufweisend:
eine Speichereinheit mit einem Funktionskatalog, welcher merkmalsbasierte Routenabschnitte umfasst, wobei jedem merkmalsbasierten Routenabschnitt verschiedene Verkehrssituationen mit jeweiligen Fahrfunktionen zugeordnet sind,
eine Recheneinheit, konfiguriert zum Durchführen einer automatisierten Situationsbewertung durch abschnittsweises Unterteilen der ausgewählten Route in einzelne aufeinanderfolgende erste merkmalsbasierte Routenabschnitte anhand von ersten Infrastrukturmerkmalen, wobei die ersten Infrastrukturmerkmale aus einer digitalen Karte extrahierbar sind, und zum Identifizieren anhand des Funktionskatalogs nicht in dem Funktionskatalog umfasste erste merkmalsbasierte Routenabschnitte, und zum anschließenden Bewerten dieser nicht umfassten ersten merkmalsbasierten Routenabschnitte,
wobei die Recheneinheit, weiter konfiguriert ist zum Durchführen einer computergestützten subjektiven Bewertung durch Identifizieren in der Situationsbewertung nicht erkannter zweiter Infrastrukturmerkmale, wobei die zweiten Infrastrukturmerkmale aus bereitgestellten, die ausgewählte Route zeigende, Video- und/oder Bilddaten identifizierbar sind, und wobei die Recheneinheit ferner dazu ausgebildet ist zum Unterteilen oder Einteilen der ersten Routenabschnitte, welche diese zweiten identifizierten Infrastrukturmerkmale aufweisen, in zweite merkmalsbasierte Routenabschnitte, und zum Identifizieren anhand des Funktionskatalogs nicht in dem Funktionskatalog umfasste zweite merkmalsbasierte Routenabschnitte, und zum Bewerten dieser nicht umfassten zweiten merkmalsbasierten Routenabschnitte,
wobei die Recheneinheit ferner weiter konfiguriert ist zum Vervollständigen und/oder Berichtigen bei Unvollständigkeit und/oder Fehlerhaftigkeit der durch die Situationsbewertung identifizierten ersten Infrastrukturmerkmale in den jeweiligen ersten Routenabschnitten anhand der, die ausgewählte Route zeigende, Video- und/oder Bilddaten, und zum Durchführen einer erneuten Situationsbewertung anhand der vervollständigten und/oder berichtigten ersten Routenabschnitte,
wobei die Recheneinheit ferner weiter konfiguriert ist, zum Durchführen einer simulativen Bewertung durch Erzeugen von Verkehrsszenarien in Bezug auf alle merkmalsbasierten Routenabschnitte und zum Bewerten aller Verkehrsszenarien unter Verwendung der Fahrfunktionen und Verkehrssituationen, welche dem Funktionskatalog entnommen werden,
wobei die Recheneinheit ferner weiter konfiguriert ist zum computergestützten Bewerten der ausgewählten Route anhand der Bewertung zumindest aus der simulativen Bewertung, der subjektiven Bewertung und der Situationsbewertung.

Die Vorteile des Verfahrens können auch auf das Routenbewertungssystem übertragen werden.

Vorzugsweise umfasst die subjektive Bewertung eine manuelle Auswertung.

Weiterhin vorzugsweise ist die Karte als eine High Definition (HD)-Karte ausgebildet. Diese bietet ein hochgenaues und realistisches 3D-Modell des Straßennetzes und ermöglicht automatisierten Fahrzeugen beispielsweise, sich auf der Straßenkarte selbst zu orten und Manöver zu planen.

Ferner wird die Aufgabe gelöst durch ein Computerprogramm, umfassend Befehle, die bei der Ausführung des Programms durch einen Computer diesen veranlassen, das wie oben beschriebene Verfahren auszuführen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

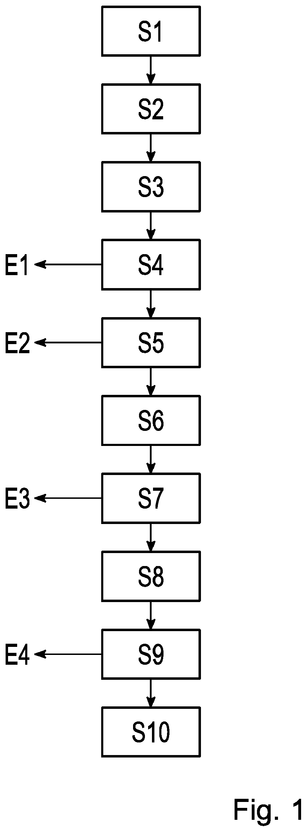

FIG 1: ein erfindungsgemäßes Verfahren in einer ersten Ausgestaltung als Flussdiagramm,
FIG 2: das erfindungsgemäße Verfahren in einer zweiten Ausgestaltung als Flussdiagramm,
FIG 3: das erfindungsgemäße Verfahren in einer dritten Ausgestaltung als Blockdiagramm,
FIG 4: das erfindungsgemäße Verfahren in einer vierten Ausgestaltung als Blockdiagramm,
FIG 5: das erfindungsgemäße Verfahren in einer fünften Ausgestaltung als Blockdiagramm.

In einem ersten Schritt S1 wird ein Funktionskatalog bereitgestellt. Dieser umfasst merkmalsbasierte Routenabschnitte, wobei jedem merkmalsbasierten Routenabschnitt verschiedene Verkehrssituationen mit den jeweiligen, auf die Verkehrssituation zugeschnittene, Fahrfunktionen zugeordnet sind.

Dabei sind merkmalsbasierte Routenabschnitte beispielsweise zu einer früheren Route erstellte Routenabschnitte, welche neben dem relevanten Straßenabschnitt noch Zusatzinformationen in Form von Infrastrukturmerkmalen zu dem Routenabschnitt enthalten, wie beispielsweise Vorfahrtsinformationen zu einer abknickenden Straße. Weitere solche Infrastrukturmerkmale sind beispielsweise Fußgängerüberwege, Verkehrszeichen, Bushaltestellen usw.

Solche Infrastrukturmerkmale beeinflussen das Fahren eines automatisierten Fahrzeugs entlang einer Route. Ein merkmalsbasierter Routenabschnitt ist beispielsweise ein Verkehrsknoten, wobei dem Verkehrsknoten spezifische knotenbedingte Infrastrukturmerkmale hinzugefügt wurden. Ist der Knoten beispielsweise eine Kreuzung, so können Vorfahrtsregeln, Spurmarkierungen, Anzahl der Fahrspuren etc. hinterlegt sein.

In einem zweiten Schritt S2 wird eine ausgewählte Route, welche durch ein autonom betriebenes Fahrzeug befahren werden soll, bereitgestellt. Diese Route muss als geeignet bewertet werden, damit ein autonomes Fahrzeug diese im autonomen Betriebsmodus befahren kann. Vorzugsweise ist dabei das Fahrzeug als Fahrzeug mit Autonomielevel vier und höher betreibbar. Ab einen Autonomielevel vier wird die Führung des Fahrzeugs dauerhaft vom Fahrzeug übernommen.

Die ausgewählte Route ist in diesem Ausführungsbeispiel eine fest vorgegebene Route, d. h. nicht nur Startpunkt und Zielpunkt sind vorgegeben, sondern die Route selber ist vorgegeben.

In einem dritten Schritt S3 wird die ausgewählte Route in merkmalsbasierte erste Routenabschnitte unterteilt. Dies erfolgt anhand von ersten Infrastrukturmerkmalen wie beispielsweise Kreuzungen etc. Diese ersten Infrastrukturmerkmale werden aus einer digitalen Karte entlang der ausgewählten Route automatisiert, beispielsweise über eine entsprechenden API (Programmierschnittstelle) durch eine Recheneinheit, extrahiert.

Anhand dieser ersten Infrastrukturmerkmale werden die merkmalsbasierten ersten Routenabschnitte automatisiert erzeugt.

Die digitale Karte kann als HD Maps (High Definition Karte) ausgebildet sein. Eine solche hochauflösende Karte (HD-Karten) umfasst eine äußerst genaue Darstellung von Straßen, die Infrastrukturmerkmale wie Fahrspurmodelle, Verkehrszeichen und Fahrspurgeometrien mit einer Genauigkeit von wenigen Zentimetern enthält.

Anschließend wird in einem vierten Schritt S4 eine automatisierte Situationsbewertung durchgeführt, indem anhand des Funktionskatalogs nicht in dem Funktionskatalog umfasste erste merkmalsbasierte Routenabschnitte durch eine Recheneinheit identifiziert werden. Dies kann beispielsweise durch einen einfachen Abgleich der einzelnen Routenabschnitte mit denjenigen Routenabschnitten, welche im Funktionskatalog vorhanden sind, erfolgen.

So gibt es beispielsweise entlang der ausgewählten Route einen Kreisverkehr, welcher im Funktionskatalog nicht vorhanden ist, bzw. zu welchen im Funktionskatalog keine Verkehrssituationen mit einer Fahrfunktion hinterlegt sind.

Die im Funktionskatalog nicht umfassten ersten merkmalsbasierten Routenabschnitte können als "Lücken" definiert werden, wenn für diese im Funktionskatalog verschiedene Verkehrssituationen mit Fahrfunktionen hinterlegt werden müssen. Die automatisierte Situationsbewertung bewertet somit quasi das Auffüllen/Beheben dieser Lücken. Diese automatisierte Situationsbewertung führt zu einem ersten Ergebnis E1. Durch die automatisierte Situationsbewertung wird eine Bewertung der statischen Umgebung der nicht umfassten, merkmalsbasierten ersten Routenabschnitte entlang der ausgewählten Route bewerkstelligt.

Gegebenenfalls können einige der erkannten Lücken durch eine Infrastrukturänderung auf der ausgewählten Route, wie beispielsweise eine eindeutige Kennzeichnung der Fahrspur, Entfernung von Parkplätzen, Änderung des Standorts der Ladestation usw. geschlossen werden.

Dieses erste Ergebnis E1 stellt somit einen ersten Auswertefaktor über die "Lücke" für die ausgewählte Route dar. Da die Situationsbewertung automatisiert durchgeführt wird, ist sie sehr schnell und kostengünstig durchzuführen.

In einem fünften Schritt S5 wird eine computergestützte subjektive Bewertung anhand von bereitgestellten Video- und/oder Bilddaten der ausgewählten Route vorgenommen. Dazu werden zweite Infrastrukturmerkmale, welche in der Situationsbewertung nicht erkannt worden sind, in den Video- und/oder Bilddaten identifiziert.

Zweite Infrastrukturmerkmale sind beispielsweise Geschwindigkeitsbegrenzungsmittel, Verkehrsinseln, die nicht in der digitalen Karte aufgeführt sind oder nur sehr schwer zu extrahieren sind und daher in der Situationsbewertung nicht erfasst wurden.

Zweite Infrastrukturmerkmale können vorzugsweise auch andere neue relevante Infrastrukturmerkmale sein, die für die ausgewählte Route erforderlich sind. So erfordert beispielsweise die Strecke in Firmenwerken die Erkennung von Spezialfahrzeugen wie Gabelstaplern. Diese können nicht aus digitalen Karten extrahiert werden.

Anhand der zweiten Infrastrukturmerkmale können zweite merkmalsbasierte Routenabschnitte generiert werden. Dazu werden die ersten Routenabschnitte, welche diese zweiten identifizierten Infrastrukturmerkmale aufweisen, unterteilt beispielsweise in einen ersten Routenabschnitt und in einen zweiten Routenabschnitt, wobei der zweite Routenabschnitt das zweite Infrastrukturmerkmal aufweist, oder werden als zweite Routenabschnitte neu eingeteilt.

Anschließend wird eine subjektive Bewertung der in den Funktionskatalog nicht umfassten zweiten merkmalsbasierten Routenabschnitte vorgenommen.

Vorzugsweise werden aus dem bereitgestellten Video-/Bilddaten noch andere Parameter wie GNSS-Signalqualität, Straßentopologie, welche keine Infrastrukturmerkmale darstellen, analysiert. Diese werden den merkmalsbasierten ersten und zweiten Routenabschnitten hinzugefügt und bei den jeweiligen Bewertungen berücksichtigt.

Zur verbesserten Identifikation der zweiten Infrastrukturmerkmale sind vorzugsweise mehrere Video- und/oder Bilddaten der ausgewählten Route zu unterschiedlichen Wetterbedingungen vorgesehen.

Diese computergestützte subjektive Bewertung führt zu einem zweiten Ergebnis E2. Dieses zweite Ergebnis E2 stellt einen weiteren Auswertefaktor über die neuen "Lücken" für die ausgewählte Route dar. Gegebenenfalls können einige der erkannten Lücken durch eine Infrastrukturänderung auf der ausgewählten Route, wie beispielsweise eine eindeutige Kennzeichnung der Fahrspur, Entfernung von Parkplätzen, Änderung des Standorts der Ladestation usw. geschlossen werden.

In dem sechsten Schritt S6, welcher vorzugsweise parallel zum fünften Schritt S5 abläuft, werden die ersten Routenabschnitte bei Unvollständigkeit und/oder Fehlerhaftigkeit der durch die Situationsbewertung identifizierten ersten Infrastrukturmerkmale in den jeweiligen ersten Routenabschnitten anhand der Video- und/oder Bilddaten vervollständigt und/oder berichtigt, und eine erneute Situationsbewertung anhand der korrigierten oder vervollständigten ersten Routenabschnitte durchgeführt. Dies führt zu einer verbesserten Situationsbewertung.

Somit sind in diesem Schritt alle oder nahezu alle erforderlichen ersten und zweiten merkmalsbasierten Routenabschnitte, die mitsamt den jeweiligen Fahrfunktionen in den verschiedenen Verkehrssituationen dem Funktionskatalog hinzugefügt werden müssen (Lücken), identifiziert.

In einem siebten Schritt S7, welcher vorzugsweise parallel zu dem sechsten Schritt S6 und dem fünften Schritt S5 abläuft, werden die dem autonomen Fahrzeug zugrundeliegenden Fahrzeugfunktionen anhand der Video-/Bilddaten computergestützt überprüft und bewertet. So wird beispielsweise die Spurerkennungsfunktion ausgewertet, um zu überprüfen, ob eine Spurmarkierung nicht korrekt erkannt wird.

Diese computergestützte Bewertung führt zu einem dritten Ergebnis E3. Dieses dritte Ergebnis E3 stellt einen weiteren Auswertefaktor für die ausgewählte Route dar.

In einem achten Schritt S8 wird eine simulative Bewertung durch Erzeugen von Verkehrsszenarien in Bezug auf alle merkmalsbasierten Routenabschnitte der Route und eine anschließende Bewertung aller Verkehrsszenarien unter Verwendung der verkehrssituationsabhängigen Fahrfunktionen und vorhandenen Verkehrssituationen, welche dem Funktionskatalog entnommen werden, durchgeführt.

In diesem Schritt S8 werden alle möglichen Verkehrsszenarien entlang der ausgewählten Route simuliert, indem die Parameter wie Position, Geschwindigkeit, Beschleunigung, Größe, Trajektorie usw. der Verkehrsteilnehmer stochastisch geändert werden. Dadurch werden alle möglichen Konstellationen kostengünstig abgedeckt, da eine Simulation im Vergleich zur Nachahmung der Szenarien auf Erprobungsarealen sehr kostengünstig ist. Zur simulativen Bewertung kann eine detaillierte Routenkarte der ausgewählten Route herangezogen werden oder beispielsweise eine HD-Karte.

Anschließend wird die Bewertung der simulierten Verkehrsszenarien durchgeführt, in dem der Funktionskatalog, also die im Funktionskatalog vorhandenen verschiedenen verkehrssituationsabhängigen Fahrfunktionen auf die Verkehrsszenarien angewendet werden.

In einem neunten Schritt S9, welcher alternativ oder zusätzlich zu dem achten Schritt S8 durchgeführt werden kann, werden Verkehrsszenarien in Bezug auf alle merkmalsbasierten Routenabschnitte der Route anhand von Sensordaten, welche vom Fahrzeug entlang der Route erzeugt werden, generiert und eine anschließende Bewertung aller Verkehrsszenarien unter Verwendung der verkehrssituationsabhängigen Fahrfunktionen, welche dem Funktionskatalog entnommen werden, durchgeführt. Diese Sensordaten werden vorzugsweise bei unterschiedlichen Wetterbedingungen generiert. Zudem werden Mängel bei der Erfassung der Sensordaten, beispielsweise Mängel im Erfassungssystem des Fahrzeugs, erkannt, welches als viertes Ergebnis E4 in die gesamte Bewertung miteinfließt.

In einem zehnten Schritt S10 werden die Ergebnisse E1 bis E4, die in den einzelnen vorangegangenen Ergebnissen zusammengetragen wurden, als ein Pre-Deployment-Evaluation (Planungsphase-Prozess) bewertet. Die in den verschiedenen Schritten vor dem Einsatz festgestellten Lücken in Form von neu erkannten Verkehrssituationen, welche nicht im Fahrzeugkatalog abgelegt sind und/oder fehlender Routenabschnitte im Fahrzeugkatalog und/oder Mängel werden zusammengetragen und bewertet.

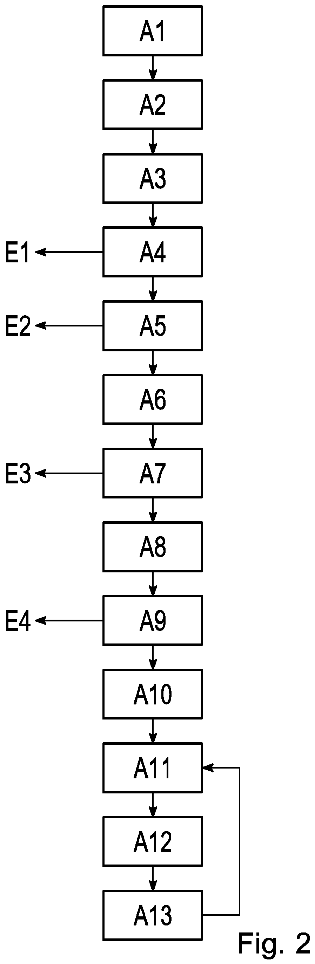

FIG 2 zeigt eine zweite Ausgestaltung des erfindungsgemäßen Verfahrens.
Dieses gleicht in seinen Schritten A1 bis A10 den Schritten S1 bis S10. Das Verfahren in FIG 2 umfasst neben der Pre-Deployment-Evaluation noch eine Post- Deployment-Evaluation (Nachbereitungs-Prozess).

Hierbei werden in einem elften Schritt A11 zunächst die erkannten Lücken und Mängel behoben und das Fahrzeug fährt auf der ausgewählten Route. Dabei kann zunächst noch ein Testfahrer eingesetzt werden, bis das autonom fahrende Fahrzeug das gewünschte automatisierte Fahrverhalten erreicht hat.

Anschließend werden in einem zwölften Schritt A12 die Sensordaten der ausgewählten Route durch das Erfassungssystem des Fahrzeugs kontinuierlich erfasst und zur Auswertung gespeichert. Dabei können die Sensordaten in einer Cloud gespeichert werden. Durch die kontinuierliche Erfassung entstehen große Datenmengen.

Durch die Entstehung von großen Datenmengen können so in einem Schritt A13 weitere Mängel, beispielsweise Infrastrukturänderung (beispielsweise Baustellen, Verblassen von Spurmarkierung, etc.) oder bei dem Erfassungssystem des Fahrzeugs, als "Lücken" und/oder bei Anwenden des Funktionskatalogs auf die erfassten Verkehrsszenarien, als "Lücken" erkannt werden. Anschließend startet die Post- Deployment-Evaluation erneut.

In FIG 2 wird somit das Verfahren zur Bewertung einer ausgewählten Route in zwei Unterkategorien unterteilt: die Pre-Deployment-Evaluation und die Post- Deployment-Evaluation (Evaluierung vor und nach der Bereitstellung in dem Fahrzeug). Die Pre-Deployment-Evaluation wird durchgeführt, bevor das automatisierte Fahrzeug mit weiterentwickelten Funktionskatalog, in welchem die durch die Pre-Deployment-Evaluation gefundenen Lücken behoben worden sind, auf der ausgewählten Route eingesetzt wird. Bei der Post- Deployment-Evaluation, wird das Fahrzeug tatsächlich auf der Route eingesetzt. Die Post- Deployment-Evaluation kann als die kontinuierliche lebenslange Erkennung von Fehlern/Lücken/Mängeln verstanden werden.

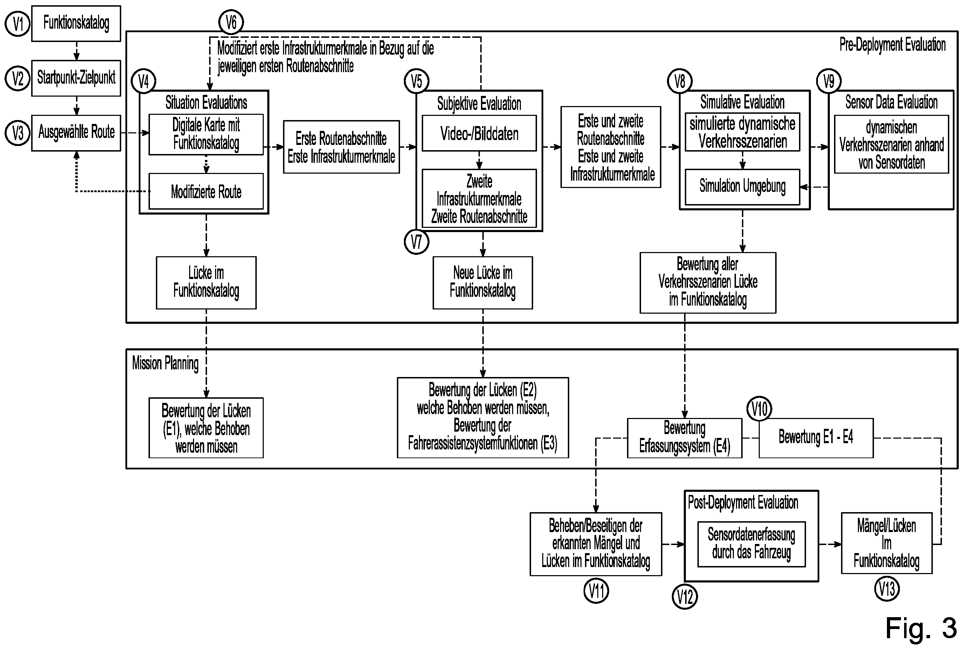

FIG 3 zeigt eine weitere Ausgestaltung des erfindungsgemäßen Verfahrens grafisch in einem Blockdiagramm. Hier ist das Verfahren ebenfalls in zwei Unterkategorien unterteilt: die Pre-Deployment-Evaluation und die Post- Deployment-Evaluation (Evaluierung vor und nach der Bereitstellung in dem Fahrzeug).

Dabei wird in einem Schritt V1 der Funktionskatalog bereitgestellt. Dieser umfasst merkmalsbasierte Routenabschnitte, wobei jedem merkmalsbasierten Routenabschnitt verschiedene Verkehrssituationen mit den jeweiligen, auf die Verkehrssituation zugeschnittene, Fahrfunktionen zugeordnet sind.

In einem zweiten Schritt V2 wird eine ausgewählte Route zur Verwendung der Route in einem autonom betriebenen Fahrzeug bereitgestellt. Die ausgewählte Route wird durch einen Startpunkt und einen Zielpunkt und dazwischenliegenden Wegpunktevorgegeben.

In einem dritten Schritt V3 wird die zunächst ausgewählte Route in merkmalsbasierte erste Routenabschnitte unterteilt. Dies erfolgt anhand von ersten Infrastrukturmerkmalen wie beispielsweise Kreuzungen etc. Diese ersten Infrastrukturmerkmale werden aus einer digitalen Karte entlang der ausgewählten Route durch eine Recheneinheit automatisiert extrahiert, beispielsweise über die entsprechende API (Programmierschnittstelle).

Anschließend wird in einem vierten Schritt V4 eine automatisierte Situationsbewertung durchgeführt, indem anhand des Funktionskatalogs nicht in dem Funktionskatalog umfasste erste merkmalsbasierte Routenabschnitte durch eine Recheneinheit identifiziert werden. Dies kann beispielsweise durch einen einfachen Abgleich der einzelnen Routenabschnitte mit denjenigen Routenabschnitten, welche im Funktionskatalog vorhanden sind, erfolgen.

Die im Funktionskatalog nicht umfassten ersten merkmalsbasierten Routenabschnitte werden als "Lücken" definiert, wenn für diese im Funktionskatalog verschiedene Verkehrssituationen mit jeweiligen Fahrfunktionen hinterlegt werden müssen. Da die Route durch den Startpunkt, Zielpunkt und den dazwischenliegenden Wegpunkte vorgegeben ist, kann die automatisierte Situationsbewertung daher verwendet werden, um verschiedene Routen basierend auf diesem vorgegebenen Startpunkt und Zielpunkt und den dazwischenliegenden Wegpunkte für die weitere Auswertung basierend auf der Größe der erkannten Lücke zu priorisieren.

Die automatisierte Situationsbewertung stellt einen ersten Auswertefaktor über die "Lücke" für die ausgewählte Route dar. Da die Situationsbewertung automatisiert durchgeführt wird, ist sie sehr schnell und kostengünstig durchzuführen.

Gegebenenfalls können einige der erkannten Lücken durch eine Infrastrukturänderung auf der ausgewählten Route, wie beispielsweise eine eindeutige Kennzeichnung der Fahrspur, Entfernung von Parkplätzen, Änderung des Standorts der Ladestation usw. geschlossen werden.

In einem fünften Schritt V5 wird eine computergestützte subjektive Bewertung anhand von bereitgestellten Video- und/oder Bilddaten der ausgewählten Route vorgenommen. Dazu werden zweite Infrastrukturmerkmale, welche in der Situationsbewertung nicht erkannt worden sind in den Video- und/oder Bilddaten identifiziert.

Anhand der zweiten Infrastrukturmerkmale können zweite merkmalsbasierte Routenabschnitte generiert werden. Dazu werden die ersten Routenabschnitte, welche diese zweiten identifizierten Infrastrukturmerkmale aufweisen, unterteilt beispielsweise in einen ersten Routenabschnitt und in einen zweiten Routenabschnitt, wobei der zweite Routenabschnitt das zweite Infrastrukturmerkmal aufweist, oder werden als zweite Routenabschnitte neu eingeteilt. Dies wird vorzugsweise manuell als auch computergestützt vorgenommen.

Die computergestützte subjektive Bewertung identifiziert "Lücken" in dem Funktionskatalog für die ausgewählte Route.

Gegebenenfalls können einige der erkannten Lücken durch eine Infrastrukturänderung auf der ausgewählten Route, wie beispielsweise eine eindeutige Kennzeichnung der Fahrspur, Entfernung von Parkplätzen, Änderung des Standorts der Ladestation usw. geschlossen werden.

In dem sechsten Schritt V6, welcher vorzugsweise parallel zum fünften Schritt V5 abläuft, werden die ersten Routenabschnitte bei Unvollständigkeit und/oder Fehlerhaftigkeit der durch die Situationsbewertung identifizierten ersten Infrastrukturmerkmale in den jeweiligen ersten Routenabschnitten anhand der Video- und/oder Bilddaten vervollständigt und/oder berichtigt, und eine erneute Situationsbewertung anhand der korrigierten oder vervollständigten ersten Routenabschnitte durchgeführt.

Somit sind in diesem Schritt alle oder nahezu alle erforderlichen ersten und zweiten merkmalsbasierten Routenabschnitte, die mitsamt den jeweiligen Fahrfunktionen in den verschiedenen Verkehrssituationen dem Funktionskatalog hinzugefügt werden müssen (Lücken), identifiziert.

In einem siebten Schritt V7, welcher vorzugsweise parallel zu dem sechsten Schritt V6 und dem fünften Schritt V5 abläuft, werden die dem autonomen Fahrzeug zugrundeliegenden Fahrerassistenzfunktionen und/oder Fahrzeugfunktionen anhand der Video-/Bilddaten computergestützt überprüft und bewertet.

In einem achten Schritt V8 wird eine simulative Bewertung durch Erzeugen von Verkehrsszenarien in Bezug auf alle merkmalsbasierten Routenabschnitte der Route und eine anschließende Bewertung aller Verkehrsszenarien unter Verwendung der verkehrssituationsabhängigen Fahrfunktionen und vorhandenen Verkehrssituationen, welche dem Funktionskatalog entnommen werden, durchgeführt.

In diesem Schritt V8 werden alle möglichen Szenarien entlang der ausgewählten Route simuliert, indem die Parameter wie Position, Geschwindigkeit, Beschleunigung, Größe, Trajektorie usw. der Verkehrsteilnehmer stochastisch geändert werden.

Anschließend wird eine Bewertung der simulierten Verkehrsszenarien durchgeführt in dem der Funktionskatalog, also die im Funktionskatalog vorhandenen verschiedenen verkehrssituationsabhängigen Fahrfunktionen auf die Verkehrsszenarien angewendet werden. Dadurch können "Lücken" beispielsweise als Probleme in dem bereits vorhandenen Funktionskatalog identifiziert werden.

In einem neunten Schritt V9 werden die Verkehrsszenarien in Bezug auf alle merkmalsbasierten Routenabschnitte der Route anhand von Sensordaten, welche vom Fahrzeug entlang der Route erzeugt werden, generiert und eine anschließende Bewertung aller Verkehrsszenarien unter Verwendung der verkehrssituationsabhängigen Fahrfunktionen, welche dem Funktionskatalog entnommen werden, durchgeführt. Diese können ebenfalls bei der simulativen Bewertung herangezogen werden. Zudem werden Mängel bei der Erfassung der Sensordaten, wie beispielsweise Mängel im Erfassungssystem des Fahrzeugs, erkannt.

Gegebenenfalls können einige der erkannten Lücken durch eine Infrastrukturänderung auf der ausgewählten Route, wie beispielsweise eine eindeutige Kennzeichnung der Fahrspur, Entfernung von Parkplätzen, Änderung des Standorts der Ladestation usw. geschlossen werden.

In einem zehnten Schritt V10 werden die Lücken, die in den einzelnen vorangegangenen Ergebnissen zusammengetragen wurden, als ein Pre-Deployment-Evaluation (Planungsphase-Prozess) bewertet. Die in den verschiedenen Schritten vor dem Einsatz festgestellten Lücken in Form von neu erkannten Verkehrssituationen, welche nicht im Fahrzeugkatalog, abgelegt sind und/oder fehlender Routenabschnitte im Fahrzeugkatalog und/oder Mängel werden zusammengetragen und bewertet.

In einem elften Schritt V11 werden zunächst die erkannten Lücken und Mängel behoben und das Fahrzeug fährt auf der ausgewählten Route.

Anschließend werden in einem zwölften Schritt V12 die Sensordaten der ausgewählten Route durch das Erfassungssystem des Fahrzeugs kontinuierlich erfasst und zur Auswertung gespeichert.

Somit können in einem Schritt V13 weitere Mängel beispielsweise bei dem Erfassungssystem des Fahrzeugs als "Lücken" oder bei Anwenden des Funktionskatalogs auf erfasste Verkehrsszenarien als "Lücken" erkannt werden.

Anschließend startet die Post-Deployment-Evaluation erneut.

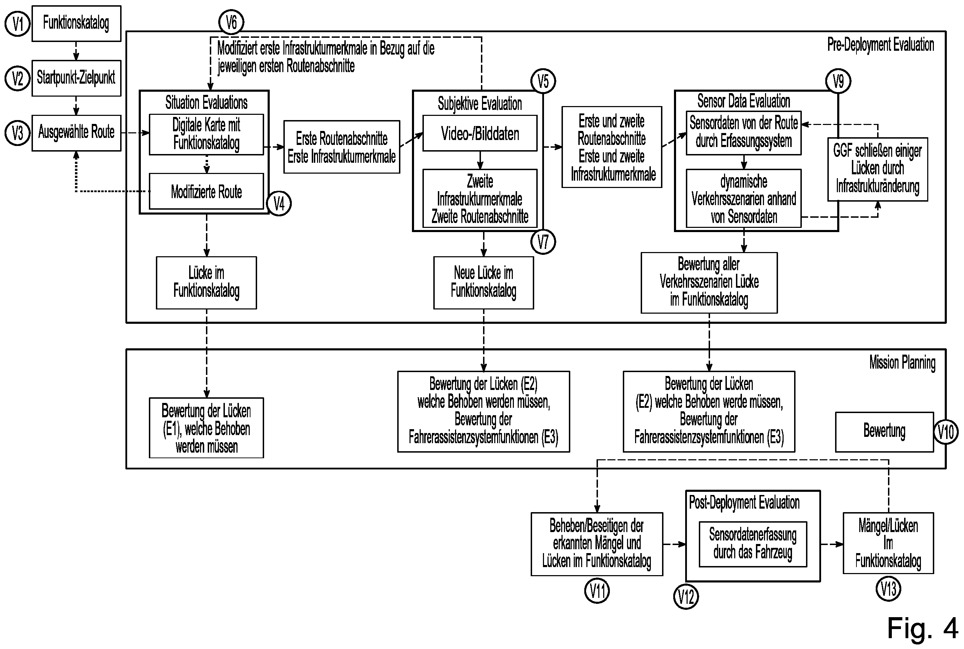

FIG 4 weist eine weitere Ausgestaltung des Verfahrens auf, welches stark an das Verfahren in FIG 3 angelehnt ist. Daher sollen hier nur noch die Unterschiede zu FIG 3 erläutert werden.

Im Verfahren der FIG 4 wird die simulative Bewertung (neunter Schritt V9) vorgenommen. Eine anschließende Bewertung aller Verkehrsszenarien wird unter Verwendung der verkehrssituationsabhängigen Fahrfunktionen, welche dem Funktionskatalog entnommen werden, durchgeführt. Durch die simulative Bewertung können "Lücken" beispielsweise Probleme in dem bereits vorhandenen Funktionskatalog erkannt werden.

Zudem werden Mängel bei der Erfassung der Sensordaten, beispielsweise Mängel im Erfassungssystem des Fahrzeugs, erkannt.

Gegebenenfalls können - wie schon bereits bei den vorherigen Verfahren- einige der erkannten Lücken durch Infrastrukturänderungen auf der ausgewählten Route, wie beispielsweise eindeutige Kennzeichnung der Fahrspuren, Änderung der Entfernung von Parkplätzen, Änderung des Standorts der Ladestation usw. geschlossen werden. Dies ist in FIG 4 grafisch aufgezeigt.

Der achte Schritt V8 entfällt.

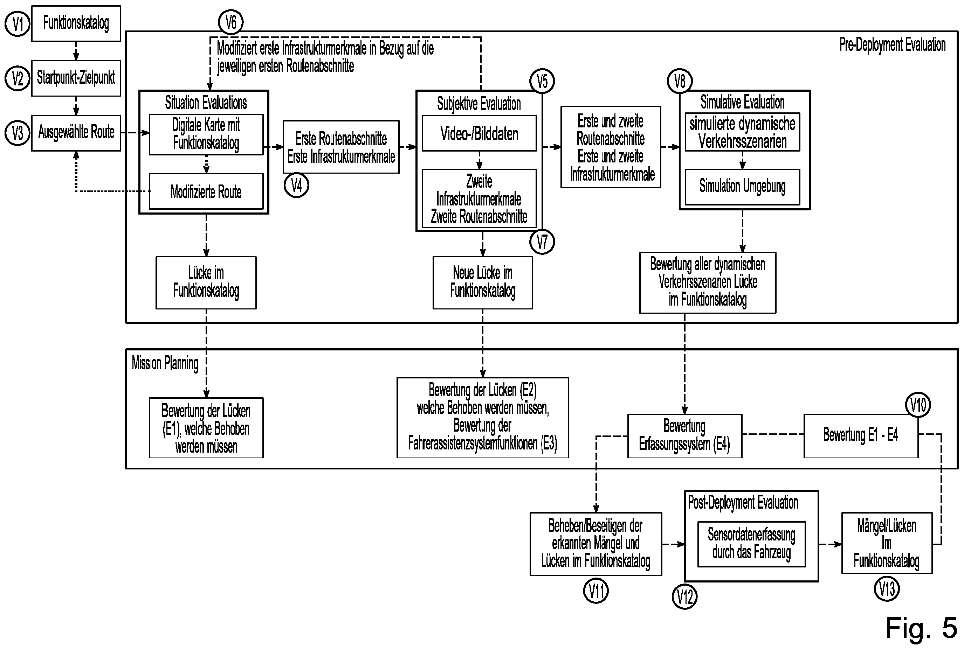

FIG 5 weist eine weitere Ausgestaltung des Verfahrens auf, welches stark an das Verfahren in FIG 3 angelehnt ist. Daher sollen hier nur noch die Unterschiede zu FIG 3 erläutert werden.

Im Verfahren der FIG 5 wird die simulative Bewertung (achter Schritt V8) durch Erzeugen von Verkehrsszenarien in Bezug auf alle merkmalsbasierten Routenabschnitte der Route und eine anschließende Bewertung aller Verkehrsszenarien unter Verwendung der verkehrssituationsabhängigen Fahrfunktionen, welche dem Funktionskatalog entnommen werden, durchgeführt.

In diesem Schritt V8 werden alle möglichen Verkehrsszenarien entlang der ausgewählten Route auf einer Recheneinheit simuliert, indem die Parameter wie Position, Geschwindigkeit, Beschleunigung, Größe, Trajektorie usw. der Verkehrsteilnehmer stochastisch geändert werden. Zur simulativen Bewertung kann eine detaillierte Routenkarte der ausgewählten Route herangezogen werden oder beispielsweise eine HD-Karte.

Der neunte Schritt V9 entfällt.

### Bezugszeichen

- S1,...,S10: Verfahrensschritte
- A1,...,A13: Verfahrensschritte
- V1,...,V13: Verfahrensschritte

## Patentansprüche

1. Verfahren zum Bewerten einer ausgewählten Route zur Verwendung der Route in einem autonom betriebenen Fahrzeug, **gekennzeichnet durch** die Schritte:
- Bereitstellen eines Funktionskatalogs in einer Speichereinheit, wobei der Funktionskatalog merkmalsbasierte Routenabschnitte umfasst, wobei jedem merkmalsbasierten Routenabschnitt verschiedene Verkehrssituationen mit jeweiligen Fahrfunktionen zugeordnet sind,
- Durchführen einer automatisierten Situationsbewertung durch abschnittsweises Unterteilen der ausgewählten Route in einzelne aufeinanderfolgende erste merkmalsbasierte Routenabschnitte anhand von ersten Infrastrukturmerkmalen, wobei die ersten Infrastrukturmerkmale aus einer digitalen Karte durch eine Recheneinheit extrahiert werden, und identifizieren anhand des Funktionskatalogs nicht in dem Funktionskatalog umfasste erste merkmalsbasierte Routenabschnitte durch die Recheneinheit, und anschließende Bewertung dieser nicht umfassten ersten merkmalsbasierten Routenabschnitte,
- Durchführen einer computergestützten subjektiven Bewertung durch Identifizieren in der Situationsbewertung nicht erkannter zweiter Infrastrukturmerkmale, wobei die zweiten Infrastrukturmerkmale aus bereitgestellten, die ausgewählte Route zeigende, Video- und/oder Bilddaten identifiziert werden, und unterteilen oder einteilen der ersten Routenabschnitte, welche diese zweiten identifizierten Infrastrukturmerkmale aufweisen, in zweite merkmalsbasierte Routenabschnitte, und identifizieren anhand des Funktionskatalogs die nicht in dem Funktionskatalog umfassten zweiten merkmalsbasierten Routenabschnitte durch die Recheneinheit, und anschließende Bewertung dieser nicht umfassten zweiten merkmalsbasierten Routenabschnitte,
- Vervollständigen und/oder berichtigen bei Unvollständigkeit und/oder Fehlerhaftigkeit der durch die Situationsbewertung identifizierten ersten Infrastrukturmerkmale in den jeweiligen ersten Routenabschnitten anhand der, die ausgewählte Route zeigende, Video- und/oder Bilddaten, und durchführen einer erneuten Situationsbewertung anhand der vervollständigten und/oder berichtigten ersten Routenabschnitte,
- Durchführen einer simulativen Bewertung durch Erzeugen von Verkehrsszenarien in Bezug auf alle merkmalsbasierten Routenabschnitte und anschließende Bewertung aller Verkehrsszenarien unter Ver-wendung der Fahrfunktionen und Verkehrssituationen, welche dem Funktions-katalog entnommen werden,
- Computergestützte Bewertung der ausgewählten Route zumindest anhand der Bewertung aus der simulativen Bewertung, der subjektiven Bewertung und der Situationsbewertung.

2. Verfahren zum Bewerten einer Route nach Anspruch 1, **gekennzeichnet durch** die weiteren Schritte:
- Bereitstellen von Sensordaten, welche von einem Erfassungssystem des Fahrzeugs entlang der ausgewählten Route bereitgestellt werden,
- Bewertung der ausgewählten Route, durch eine computergestützte Bewertung des Erfassungssystems anhand der bereitgestellten Sensordaten und eine Bewertung des Funktionskatalogs anhand des Anwendens des Funktionskatalogs auf die, durch die bereitgestellten Sensordaten erfassten Verkehrsszenarien.

3. Verfahren nach Anspruch 2, **dadurch gekennzeichnet, dass** die Bewertung des Erfassungssystems und die Bewertung des Funktionskatalogs im Nachgang durch die Recheneinheit erfolgt.

4. Verfahren nach Anspruch 2 oder 3, **dadurch gekennzeichnet, dass** die Sensordaten kontinuierlich erzeugt werden.

5. Verfahren nach einem der vorhergehenden Ansprüche, **dadurch gekennzeichnet, dass**
die Video- und/oder Bilddaten der ausgewählten Route durch ein Erfassungssystem des Fahrzeugs bereitgestellt werden.

6. Verfahren nach Anspruch 5, **dadurch gekennzeichnet, dass**
mehrere Video- und/oder Bilddaten der ausgewählten Route zu unterschiedlichen Wetterdaten durch das Erfassungssystem des Fahrzeugs bereitgestellt werden.

7. Verfahren nach Anspruch 5 oder 6 **dadurch gekennzeichnet, dass** zumindest teilweise die dem autonomen Fahrzeug zugrundeliegenden Fahrfunktionen und/oder Fahrzeugfunktionen anhand der Video-/Bilddaten computergestützt überprüft werden.

8. Verfahren nach einem der vorhergehenden Ansprüche, **dadurch gekennzeichnet, dass**
die Verkehrsszenarien virtuell in der Recheneinheit erzeugt werden.

9. Verfahren nach einem der vorhergehenden Ansprüche, **dadurch gekennzeichnet, dass**
die Video- und/oder Bilddaten der ausgewählten Route durch das Erfassungssystem eines oder mehrerer Verkehrsteilnehmer auf einem Server bereitgestellt werden.

10. Verfahren nach einem der vorhergehenden Ansprüche, **dadurch gekennzeichnet, dass**
verschiedenen Route durch einen Startpunkt und einen Zielpunkt und dazwischenliegenden Wegpunkte vorgegeben werden und die automatisierte Situationsbewertung verwendet wird, um die verschiedene Routen basierend auf diesem vorgegebenen Startpunkt und Zielpunkt und den dazwischenliegenden Wegpunkte für die weitere Auswertung zu priorisieren.

11. Routenbewertungssystem zum Bewerten einer ausgewählten Route zur Verwendung der Route in einem autonom betriebenen Fahrzeug, aufweisend:
eine Speichereinheit mit einem Funktionskatalog, welcher merkmalsbasierte Routenabschnitte umfasst, wobei jedem merkmalsbasierten Routenabschnitt verschiedene Verkehrssituationen mit jeweiligen Fahrfunktionen zugeordnet sind,
eine Recheneinheit, konfiguriert zum Durchführen einer automatisierten Situationsbewertung durch abschnittsweises Unterteilen der ausgewählten Route in einzelne aufeinanderfolgende erste merkmalsbasierte Routenabschnitte anhand von ersten Infrastrukturmerkmalen, wobei die ersten Infrastrukturmerkmale aus einer digitalen Karte extrahierbar sind, und zum Identifizieren anhand des Funktionskatalogs nicht in dem Funktionskatalog umfasste erste merkmalsbasierte Routenabschnitte, und zum anschließenden Bewerten dieser nicht umfassten ersten merkmalsbasierten Routenabschnitte,
wobei die Recheneinheit, weiter konfiguriert ist zum Durchführen einer computergestützten subjektiven Bewertung durch Identifizieren in der Situationsbewertung nicht erkannter zweiter Infrastrukturmerkmale, wobei die zweiten Infrastrukturmerkmale aus bereitgestellten, die ausgewählte Route zeigende, Video- und/oder Bilddaten identifizierbar sind, und wobei die Recheneinheit ferner dazu ausgebildet ist zum Unterteilen oder Einteilen der ersten Routenabschnitte, welche diese zweiten identifizierten Infrastrukturmerkmale aufweisen, in zweite merkmalsbasierte Routenabschnitte, und zum Identifizieren anhand des Funktionskatalogs nicht in dem Funktionskatalog umfasste zweite merkmalsbasierte Routenabschnitte, und zum Bewerten dieser nicht umfassten zweiten merkmalsbasierten Routenabschnitte,
wobei die Recheneinheit ferner weiter konfiguriert ist zum Vervollständigen und/oder Berichtigen bei Unvollständigkeit und/oder Fehlerhaftigkeit der durch die Situationsbewertung identifizierten ersten Infrastrukturmerkmale in den jeweiligen ersten Routenabschnitten anhand der, die ausgewählte Route zeigende, Video- und/oder Bilddaten, und zum Durchführen einer erneuten Situationsbewertung anhand der vervollständigten und/oder berichtigten ersten Routenabschnitte,
wobei die Recheneinheit ferner weiter konfiguriert ist, zum Durchführen einer simulativen Bewertung durch Erzeugen von Verkehrsszenarien in Bezug auf alle merkmalsbasierten Routenabschnitte und zum Bewerten aller Verkehrsszenarien unter Verwendung der Fahrfunktionen und Verkehrssituationen, welche dem Funktionskatalog entnommen werden,
wobei die Recheneinheit ferner weiter konfiguriert ist zum computergestützten Bewerten der ausgewählten Route anhand der Bewertung zumindest aus der simulativen Bewertung, der subjektiven Bewertung und der Situationsbewertung.

12. Routenbewertungssystem nach Anspruch 11, **dadurch gekennzeichnet, dass** die subjektive Bewertung eine manuelle Auswertung umfasst.

13. Routenbewertungssystem nach Anspruch 11 oder 12, **dadurch gekennzeichnet, dass**
die digitale Karte als eine High Definition (HD)-Karte ausgebildet ist.

14. Computerprogramm, umfassend Befehle, die bei der Ausführung des Programms durch einen Computer diesen veranlassen, das Verfahren nach einem der vorhergehenden Ansprüche 1 bis 10 auszuführen.
